# EUROPÄISCHE PATENTSCHRIFT

(11) **EP 2 847 584 B1**
(45) Veröffentlichungstag und Bekanntmachung des Hinweises auf die Patenterteilung: **03.01.2018**
(21) Anmeldenummer: 13720376.6
(22) Anmeldetag: 02.05.2013
(51) Int. Cl.: G01N 29/07, G01N 29/44

(54) **VERFAHREN ZUR ERFASSUNG VON SCHÄDIGUNGEN AN EINER HOHLWELLE**
METHOD FOR DETECTING DAMAGE ON A HOLLOW SHAFT
PROCÉDÉ DE DÉTECTION DE DÉTÉRIORATIONS SUR UN ARBRE CREUX

(30) Priorität: 11.05.2012 EP 12167626
(43) Veröffentlichungstag der Anmeldung: 18.03.2015
(73) Patentinhaber: BASF SE, 67056 Ludwigshafen am Rhein (DE)
(72) Erfinder: STEPHAN, Oskar, 68766 Hockenheim (DE)
(86) Internationale Anmeldenummer: PCT/EP2013/059114
(87) Internationale Veröffentlichungsnummer: WO 2013/167456

(56) Entgegenhaltungen:
- EP-A1- 1 811 282
- EP-A2- 0 304 394
- EP-A2- 2 546 642
- DE-A1- 19 952 407
- US-A1- 2009 320 599

## Beschreibung

Die Erfindung betrifft ein Verfahren zur Erfassung von Schädigungen an einer Hohlwelle, wobei die Hohlwelle keine radial umlaufenden Kerben, Öffnungen oder Kanäle aufweist.

Wellen werden in allen Apparaten eingesetzt, die rotierende Bauteile aufweisen. Hierbei werden die Wellen angetrieben. Insbesondere bei großen Apparaten ist es im Zuge der Materialersparnis üblich, Hohlwellen zu verwenden. Auch werden Hohlwellen eingesetzt, wenn beispielsweise eine Kühlung oder eine Heizung der Welle notwendig ist.

Insbesondere beim Einsatz in Knetern oder Trocknern weisen die Wellen an ihrem Außenumfang Funktionselemente auf, zum Beispiel Haken oder Schaufeln, mit denen das zu trocknende oder knetende Material bewegt wird. Hierdurch wird über die Funktionselemente eine Kraft auf die Welle ausgeübt, die zu Schädigungen der Welle führen kann. Hierbei sind zum einen Materialermüdungserscheinungen maßgeblich als auch beispielsweise Materialfehler, die zunächst zu Rissen führen können. Solche Risse können im schlimmsten Fall einen Bruch der Welle und damit einen irreparablen Schaden an der Anlage, in der die Welle eingesetzt ist, nach sich ziehen.

Um derartige Wellenschädigungen zu vermeiden ist es notwendig, die Welle regelmäßig auf Beschädigungen, insbesondere auf von außen nicht sichtbare Risse zu prüfen. Hierzu werden üblicherweise Ultraschall-Messverfahren eingesetzt. Bei gängigen Verfahren wird hierzu die gesamte Oberfläche des Wellenmantels abgetastet, wobei Fehlstellen zu einer veränderten Reflexion des Echos und damit zu einem Signal führen, das auf eine solche Schädigung hindeutet. Nachteil bei diesem Verfahren ist jedoch, dass es notwendig ist, die Welle zur Prüfung aus der Anlage auszubauen oder den entsprechenden Apparat zu öffnen, um Zugang zur Welle zu erhalten. Ein weiterer Nachteil ist der große Zeitaufwand, der durch die Prüfung über die gesamte Mantellänge notwendig ist. Neben der Messung an der Außenoberfläche ist es auch bekannt, bei einer Hohlwelle die Messung von der Innenseite aus durchzuführen. Dies ist zum Beispiel in DE 199 52 407 A1 beschrieben. Jedoch ist auch hier Nachteil, dass insbesondere bei langen Wellen viele Messungen durchgeführt werden müssen, bis die gesamte Welle vermessen worden ist.

Ein Verfahren zur Überwachung von Dampferzeugerrohren, bei dem an den Stirnseiten der Rohre ein Sensor angebracht wird, ist aus EP-A 1 811 282 bekannt. EP-A 2 546 642 hat ein Verfahren zur Überwachung einer drehenden Welle in einem Kraftwerk oder einem Schienenfahrzeug zum Gegenstand. Für die Prüfung von Rissen in einer Turbinenwelle ist aus DE-A 37 28 369 oder EP-A 0 304 394 bekannt, einen Prüfkopf mit einem Vorsatzkeil an der Stirnfläche der Welle anzukoppeln. Der Prüfkopf sendet Ultraschallimpulse bestimmter Frequenzen aus und wird mit einer mechanischen Vorrichtung vor der Stirnfläche bewegt. Die eingesetzten Wellen sind dabei üblicherweise Vollwellen, und durch den Vorsatzkeil wird ein Winkel eingestellt, mit dem von der Stirnfläche aus in Richtung der Oberfläche der Welle Signale gesendet werden. Der Winkel wird dabei so eingestellt, dass die gesamte Welle von der Stirnfläche aus erfasst werden kann. Das beschriebene Verfahren lässt sich jedoch nicht für eine Hohlwelle einsetzen, die nur eine geringe Wandstärke aufweist. Insbesondere problematisch ist, dass bereits eine kleine Neigung des Prüfkopfes dazu führt, dass das Signal nicht die gesamte Länge der Welle durchtritt und somit nicht die Welle über ihre gesamte Länge auf Beschädigungen hin überprüft werden kann.

Aufgabe der Erfindung ist es daher, ein Verfahren zur Erfassung von Schädigungen an einer Hohlwelle bereitzustellen, das ohne Ausbau der Welle und zuverlässig durchgeführt werden kann.

Gelöst wird die Aufgabe durch ein Verfahren zur Erfassung von Schädigungen an einer Hohlwelle in einem Schaufeltrockner, einem Scheibentrockner oder einem Kneter, wobei die Hohlwelle keine radial umlaufenden Kerben, Öffnungen oder Kanäle aufweist, das folgende Schritte umfasst:
(a) Positionierung eines Ultraschallsensors zum Senden und Empfangen eines Signals an einer Stirnseite der Hohlwelle,
(b) Senden eines Signals und Empfangen eines Echos des Signals,
(c) Bestimmung der Signallaufzeit vom Zeitpunkt des Sendens des Signals bis zum Empfang des Echos,
(d) Vergleich der Signallaufzeit mit einem vorgegebenen Sollwert und Ausgabe einer Warnung bei einer Abweichung.

Durch das erfindungsgemäße Verfahren ist es möglich, auch eine Welle in eingebautem Zustand zu untersuchen. Anders als bei den aus dem Stand der Technik bekannten Verfahren ist es nicht notwendig, die Welle zur Prüfung auszubauen. Auch ist es nicht notwendig, zum Beispiel bei einem großen Apparat, der die Welle enthält, die Welle komplett freizulegen, um eine Messung durchzuführen. Es ist bereits ausreichend, einen Zugang an einer Stirnseite der Welle freizugeben. Durch den Zugang an der Stirnseite der Welle kann dann die Messung durchgeführt werden. Hierzu ist es zum Beispiel möglich, den eingesetzten Sensor an einer Position zu halten und die Welle einmal zu rotieren, um über den gesamten Umfang zu messen.

Um das erfindungsgemäße Verfahren insbesondere für Wellen einzusetzen, deren Wandstärke gering ist gegenüber der Länge, ist es weiterhin vorteilhaft, wenn die Stirnfläche der Welle einen Winkel zur Achse der Welle aufweist, der im Bereich von 89 bis 91°, mehr bevorzugt im Bereich von 89,95 bis 90,05° liegt. Durch den entsprechenden Winkel der Stirnfläche der Welle zur Achse der Welle kann sichergestellt werden, dass das Signal den Wellenmantel über die gesamte Wellenlänge durchdringt und bis zum Ende der Welle gelangt. Auf diese Weise können Schädigungen in der Welle, beispielsweise Risse in der Welle an jeder beliebigen Stelle detektiert werden.

Um Risse an jeder beliebigen Position des Mantels zu detektieren, ist es weiterhin vorteilhaft, wenn der Sensor in einem Bereich zwischen dem radialen Abstand der Innenfläche des Mantels zur Achse und dem radialen Abstand zur Außenfläche des Mantels zur Achse an der Stirnseite der Welle positioniert wird. Hierbei ist es weiterhin möglich, beispielsweise bei einer größeren Wandstärke des Mantels den Sensor im Bereich zwischen der Innenfläche des Mantels zur Außenfläche des Mantels zu verschieben. Gleichzeitig sollte, wie bereits vorstehend erwähnt, der Sensor über den Umfang des Mantels bewegt werden. Dies kann entweder dadurch erfolgen, dass der Sensor über den Umfang des Mantels bewegt wird oder alternativ, indem der Sensor an einer Position gehalten wird und die Welle eine Rotation durchführt. Hierbei ist es insbesondere vorteilhaft, wenn die Welle jeweils schrittweise ein kleines Stück weiterbewegt wird und dann erneut gemessen wird, damit der Sensor während einer Messung an einer Position verbleibt.

Als Sensor wird ein Sensor eingesetzt, der nach dem Puls-Echo-Verfahren arbeitet. Derartige Sensoren senden ein Signal aus und empfangen ein Echo des Signals, das an einer Unstetigkeit, beispielsweise an einem Riss oder einem Lunker reflektiert wird. Das von dem Sensor ausgesendete Signal ist ein Ultraschallsignal und der Sensor ein Ultraschall-Sensor.

Ein geeigneter Ultraschall-Sensor, der zur Durchführung des Verfahrens eingesetzt werden kann, weist zum Beispiel eine Arbeitsfrequenz im Bereich von 0,1 bis 1 MHz auf. Ein geeigneter Sensor ist zum Beispiel ein Sensor der mit einer Frequenz von 0,5 MHz in Kompositausführung arbeitet. Hierzu kann zum Beispiel ein Prüfkopf B1F der Fa. GE Measurement & Control Solutions eingesetzt werden.

Das erfindungsgemäße Verfahren eignet sich insbesondere für Hohlwellen, die eine Länge im Bereich von 2 bis 16 m, insbesondere im Bereich von 3 bis 12 m, aufweisen. Derartige Hohlwellen finden Einsatz zum Beispiel in Schaufeltrocknern, Scheibentrocknern oder Knetern. In Abhängigkeit vom Einsatz der Welle ist es möglich, dass auf der Welle Funktionselemente, zum Beispiel Schaufeln, Scheiben oder Knetelemente, aufgeschweißt sind. Durch eine geeignete Positionierung des Sensors ist es dabei auch möglich, zum Beispiel Schäden an Schweißnähten, mit denen die Funktionselemente, beispielsweise Schaufeln, Scheiben oder Knetelemente, auf die Hohlwelle aufgeschweißt sind, zu erkennen.

Die Länge der Welle, für die das Verfahren eingesetzt werden kann, ist insbesondere durch die Reichweite des Sensors begrenzt. Je präziser der Winkel zwischen Stirnseite und Wellenmantel gefertigt ist, d.h. je näher dieser bei 90 ° liegt, umso größer ist ebenfalls die Reichweite. Bei einer Abweichung von dem rechten Winkel werden die vom Sensor gesendeten Signale in Richtung der Wellenoberfläche gesendet, so dass diese nicht über die gesamte Länge durch den Mantel der Welle reichen. Aus diesem Grund ist mit einer größeren Wellenlänge auch eine größere Präzision des Winkels zwischen Stirnfläche und Mantelfläche notwendig. Diese Präzision der Ausrichtung kann bei einer Abweichung des Winkels auch durch Einlegen eines Vorsatzkeils erreicht werden. Hierzu ist es für jede Messposition notwendig, den genauen Winkel zwischen Stirnfläche und Mantel zu erfassen, um dann den passenden Vorsatzkeil auszuwählen. Das Material des Vorsatzkeils ist dabei so zu wählen, dass dieses möglichst ähnliche Schalleigenschaften hat wie die Hohlwelle.

Um Fehlmessungen auszuschließen ist es weiterhin vorteilhaft, wenn der Sensor mit einem Kontaktmittel auf die Stirnseite der Hohlwelle aufgesetzt wird. Das Kontaktmittel wird dabei vorzugsweise so gewählt, dass dieses ähnliche Schalleigenschaften aufweist wie das Material der Welle. Bei Einsatz eines Vorsatzkeils wird das Kontaktmittel zwischen Sensor und Vorsatzkeil und zwischen Vorsatzkeil und Welle eingebracht.

Weiterhin eignet sich das Verfahren insbesondere für Hohlwellen, die aus einem metallischen Werkstoff gefertigt sind. Als Werkstoffe für die Hohlwelle eignen sich dabei zum Beispiel eisenhaltige Metalle, beispielsweise Stähle, oder auch Aluminium.

Um weiterhin Fehlmessungen auszuschließen, ist es bevorzugt, wenn die Stirnfläche der Welle nicht plattiert ist. Bevorzugt ist die Stirnfläche der Hohlwelle, auf die der Sensor für die Messung aufgesetzt wird, aus einem Vollmaterial gefertigt oder geschweißt.

Auch bei einer fehlerfreien Schweißnaht wird das Signal nicht reflektiert, so dass die Schweißnähte nicht als Fehlstellen in der Welle interpretiert werden.

Ausführungsbeispiele der Erfindung sind in den Figuren dargestellt und werden in der nachfolgenden Beschreibung näher erläutert.

Es zeigen:
- Figur 1: einen Ausschnitt einer Hohlwelle mit darauf platziertem Sensor,
- Figur 2: einen Schnitt durch eine Hohlwelle.

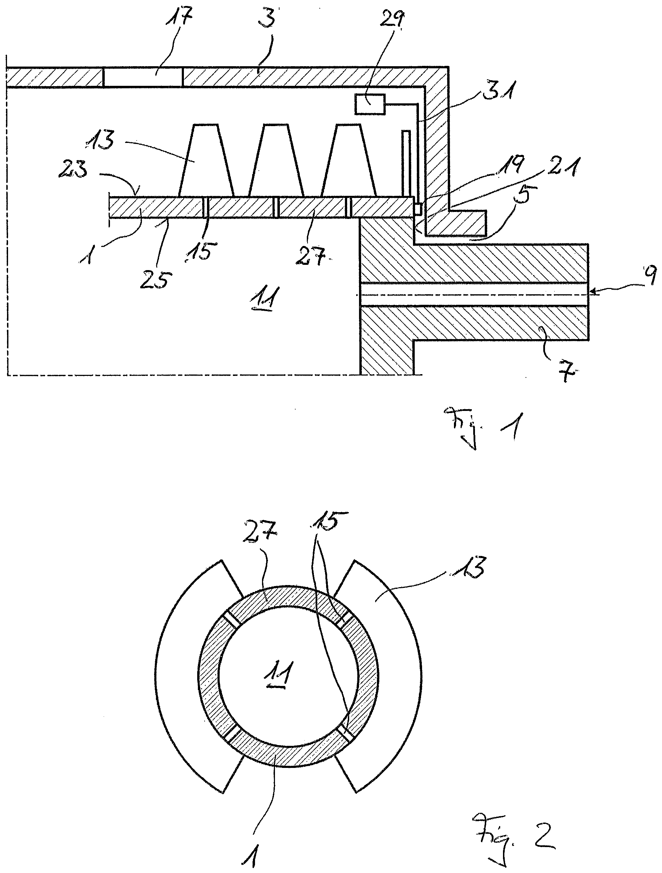

In Figur 1 ist ein Ausschnitt aus einer Hohlwelle mit darauf platziertem Sensor dargestellt.

In einer Vielzahl von Apparaten werden Hohlwellen 1 eingesetzt. Derartige Apparate sind zum Beispiel Mischer, Kneter oder Trockner, in denen Material gefördert oder umgewälzt wird. Um die Funktion des Apparates zu gewährleisten, ist die Hohlwelle 1 dabei üblicherweise von einem Gehäuse 3 umschlossen. Das Gehäuse 3 weist mindestens einseitig einen Durchlass 5 auf, durch den ein Wellenzapfen 7 geführt ist. Der Wellenzapfen 7 ist zum Beispiel mit einem Antrieb, beispielsweise einem Motor und einem Getriebe verbunden. Über den Wellenzapfen 7 kann die Hohlwelle 1 in Rotation versetzt werden. An dem dem Antrieb gegenüberliegenden Ende ist die Hohlwelle 1 beispielsweise mit einem zweiten Wellenzapfen ausgestattet, der nur zur Lagerung dient. Neben einem Wellenzapfen 7, wie er in Figur 1 dargestellt ist, kann die Hohlwelle 1 jedoch auch auf jede beliebige andere, dem Fachmann bekannte Weise, gelagert und angetrieben werden.

Durch die Gestaltung der Welle als Hohlwelle 1 ist es möglich, die Hohlwelle 1 zum Beispiel mit einem Temperiermedium zu durchströmen, um so ein im Apparat enthaltenes Material, das mit Hilfe der Hohlwelle 1 transportiert, umgewälzt oder gefördert werden soll, zu temperieren. Hierzu ist es zum Beispiel möglich, in Wellenzapfen 7 einen Kanal 9 auszubilden. Durch den Kanal 9 kann ein Temperiermedium, beispielsweise Dampf, Wasser oder ein Thermalöl in den von der Hohlwelle umschlossenen Raum 11 geleitet werden und die Hohlwelle durchströmen.

Um die Funktion der Hohlwelle 1 zum Fördern, Mischen oder Kneten zu gewährleisten, sind an der Hohlwelle 1 vorzugsweise Funktionselemente 13 angebracht. Die Funktionselemente 13 können zum Beispiel Schaufeln, Scheiben oder Knetelemente sein.

Die Art der Funktionselemente 13 bestimmt sich dabei aus dem Einsatzzweck des Apparates. Wenn der Apparat beispielsweise als Kneter eingesetzt wird, so sind die Funktionselemente 13 vorzugsweise Knetelemente. Wenn der Apparat als Trockner verwendet wird, so werden vorzugsweise Scheiben oder Schaufeln als Funktionselemente 13 vorgesehen.

Insbesondere bei Einsatz der Hohlwelle 1 in einem Apparat zur Trocknung ist es vorteilhaft, wenn die Funktionselemente 13 ebenfalls temperiert werden können. Hierzu ist es zum Beispiel möglich, die Funktionselemente 13 hohl zu gestalten und über Kanäle 15 mit dem Innenraum 11 der Hohlwelle 1 zu verbinden. Durch die Kanäle 15 kann Temperiermedium aus dem Raum 11 in die hohlförmig gestalteten Funktionselemente 13 strömen. Vorzugsweise sind die Funktionselemente 13 mit einem zweiten Kanal 15, durch die das Temperiermedium wieder zurück in den Raum 11 der Hohlwelle 1 gelangen kann, ausgestattet. Die Kanäle 15 können zum Beispiel in Form einer Bohrung ausgeführt sein.

Insbesondere bei dem Einsatz des die Hohlwelle 1 aufweisenden Apparates für Verfahren, die große Durchsätze erfordern oder bei denen große Mengen verarbeitet werden sollen, ist der Apparat entsprechend groß gestaltet. So kann die Hohlwelle 1 zum Beispiel Längen im Bereich von 2 bis 16 m aufweisen. Entsprechend große Apparate werden zum Beispiel eingesetzt bei der Herstellung von Poly(meth)acrylaten, die als Superabsorber Einsatz beispielsweise in Hygieneprodukten finden. Hierbei finden Hohlwellen 1 sowohl Einsatz in Knetreaktoren, in denen die Poly(meth)acrylate hergestellt werden als auch in Trocknern, die zur Weiterverarbeitung genutzt werden. Um einen einfachen Zugang zur Welle zu erhalten, ohne jeweils den Apparat öffnen zu müssen und einen Gehäusedeckel abzunehmen, der bis zu mehreren Tonnen wiegen kann und damit entsprechend schwierig zu handhaben ist, ist im Gehäuse 3 beispielsweise ein Mannloch 17 ausgebildet, welches so dimensioniert ist, dass eine Person durch das Mannloch 17 in den Apparat hineinklettern kann. Dies ist zum Beispiel für gelegentliche Inspektionen notwendig, um festzustellen, ob Schädigungen an der Hohlwelle 1 oder den Funktionselementen 13 durch den Betrieb aufgetreten sind.

Insbesondere feine Risse, die zu einem Versagen der Hohlwelle 1 führen können, können jedoch auf übliche Weise nicht unmittelbar erkannt werden. Hierzu müssen Messverfahren eingesetzt werden, beispielsweise Ultraschall-Messverfahren, bei denen ein Ultraschallsignal in die Welle gesendet wird und ein an einer Fehlstelle, beispielsweise einem Lunker oder Riss reflektiertes Echo des Signals empfangen wird. Aus der Laufzeit des Signals vom Senden des Signals bis zum Empfang des Echos kann die Position der Fehlstelle erkannt werden. Eine solche Fehlstelle ergibt sich, wenn die Laufzeit des Signals nicht der Laufzeit entspricht, die notwendig wäre, um die Länge der Welle zu durchdringen. Üblicherweise werden solche Messverfahren bei Hohlwellen über den Außenumfang durchgeführt. Dies führt dazu, dass eine Vielzahl an Messpositionen notwendig ist, um eine Inspektion der Hohlwelle 1 durchzuführen. Zudem ist die Hohlwelle 1 durch das Mannloch 17 nur schlecht zugänglich. Um eine umfassende Überprüfung der Welle durchzuführen, wäre es notwendig, das Gehäuse 3 zu öffnen, um so Zugang zur Welle zu erhalten.

Erfindungsgemäß wird zur Erfassung von Fehlstellen daher ein Sensor 19 an einer Stirnfläche 21 der Hohlwelle 1 positioniert. Der Sensor 19 wird dabei zwischen der Außenfläche 23 und der Innenfläche 25 des Mantels 27 der Hohlwelle 1 positioniert. Um über die gesamte Länge der Hohlwelle 1 zu messen ist es notwendig, dass der Winkel zwischen Stirnfläche 21 und Außenfläche 23 des Mantels 27 präzise ist, damit das Signal nicht durch einen entsprechenden Winkel an die Außenfläche des Mantels gelangt und dort reflektiert wird. Der Winkel zwischen Stirnfläche 21 und Außenfläche 23 des Mantels liegt daher vorzugsweise im Bereich von 89 bis 91°, mehr bevorzugt im Bereich von 89,95 bis 90,05°. Dies erlaubt es, auch bei einem Mantel 27 mit geringer Wanddicke und einer langen Welle durch Positionierung des Sensors 19 an der Stirnfläche zuverlässige Ergebnisse zu erhalten. Um die vom Sensor 19 erfassten Daten ablesen zu können, ist der Sensor 19 üblicherweise mit einem Steuergerät 29 verbunden. Die Verbindung des Sensors 19 mit dem Steuergerät 29 erfolgt dabei im Allgemeinen über ein Kabel 31. Alternativ ist jedoch auch eine kabellose Übertragung möglich. Die Verwendung eines Kabels 31 hat jedoch den Vorteil, dass zum Beispiel auch die notwendige Stromversorgung für den Sensor 19 im Steuergerät 29 untergebracht werden kann und so der Sensor 19 kompakter gebaut werden kann. Dies erlaubt es, den Sensor 19 auch bei einem engen Spalt zwischen Welle 1 und Gehäuse 3 einzusetzen.

Um zuverlässige Messergebnisse zu erhalten ist es weiterhin notwendig, dass die Hohlwelle 1 an ihrer Stirnfläche 21 nicht plattiert ist. Zuverlässige Messergebnisse werden nur erhalten, wenn Welle 1 und Stirnfläche 21 aus einem massiven Material gefertigt sind. Hierzu kann einerseits massives Material eingesetzt werden oder alternativ auch eine Schweißung. Es dürfen lediglich keine Hohlräume, Risse oder Lunker in beliebiger Form vorhanden sein, an denen das Signal des Sensors 19 reflektiert werden kann.

Mit dem erfindungsgemäßen Verfahren ist es nur nicht möglich, in den Bereichen zu messen, in denen die Kanäle 15 positioniert sind. Aus diesem Grund ist es vorteilhaft, die Kanäle 15 alle fluchtend in einer Linie zu positionieren. Da sich beispielsweise ein Riss üblicherweise nicht in gerade Linie von einem Kanal zum nächsten Kanal 15 erstrecken wird, stören die Kanäle 15 nicht für die Messung. Weiterhin ist es vorteilhaft, die Kanäle 15 so klein wie möglich zu gestalten.

Alternativ ist es auch möglich, den Sensor 19 zum Beispiel mit einem leichten Winkel zu positionieren, so dass das Signal zwischen zwei Kanälen 15 durchgeführt wird. Hierzu ist es zum Beispiel möglich, mit einem geeigneten Aufsatz verschiedene Winkel einzustellen, mit denen der Sensor positioniert wird, um jeweils den gesamten Mantel 27 der Hohlwelle 1 zu prüfen. Die Anbindung des Sensors 19 an der Stirnfläche 21 der Hohlwelle 1 erfolgt dabei vorzugsweise über ein geeignetes Kontaktmittel, das ähnliche Schalleigenschaften aufweist wie das Material der Hohlwelle 1. Ein entsprechender Aufsatz in Form eines Vorsatzkeils kann auch genutzt werden, wenn der Winkel zwischen Stirnfläche 21 und Außenfläche 23 des Mantels vom rechten Winkel abweicht.

Ein Schnitt durch eine Hohlwelle, wie sie in Figur 1 dargestellt ist, ist in Figur 2 gezeigt. Die Hohlwelle 1 weist als Funktionselemente 13 Scheiben auf, die über jeweils zwei Kanäle 15 mit dem Raum 11 im Inneren der Hohlwelle 1 verbunden sind. Zur Messung von Wellenschädigungen wird der Sensor 19 einmal über den Umfang des Mantels 27 bewegt und an jeder Messposition eine Messung durchgeführt. Hierzu ist es möglich, die Hohlwelle 1 jeweils ein kleines Stück weiterzudrehen und den Sensor 19 an einer Position zu halten. Alternativ ist es auch möglich, bei Stillstand der Welle den Sensor 19 jeweils ein kleines Stück weiter zu bewegen. Es wird jeweils nur an den Stellen, an denen sich die Kanäle 15 befinden, kein auswertbares Messergebnis erhalten.

### Bezugszeichenliste

- 1: Hohlwelle
- 3: Gehäuse
- 5: Durchlass
- 7: Wellenzapfen
- 9: Kanal
- 11: Raum
- 13: Funktionselement
- 15: Kanal
- 17: Mannloch
- 19: Sensor
- 21: Stirnfläche
- 23: Außenfläche
- 25: Innenfläche
- 27: Mantel
- 29: Steuergerät
- 31: Kabel

## Patentansprüche

1. Verfahren zur Erfassung von Schädigungen an einer Hohlwelle (1) in einem Schaufeltrockner, einem Scheibentrockner oder einem Kneter, wobei die Hohlwelle (1) keine radial umlaufenden Kerben, Öffnungen oder Kanäle aufweist, folgende Schritte umfassend:
(a) Positionierung eines Ultraschallsensors (19) zum Senden und Empfangen eines Signals an einer Stirnseite (21) der Hohlwelle (1),
(b) Senden eines Signals und Empfangen eines Echos des Signals,
(c) Bestimmung der Signallaufzeit vom Zeitpunkt des Sendens des Signals bis zum Empfangen des Echos,
(d) Vergleich der Signallaufzeit mit einem vorgegebenen Sollwert und Ausgabe einer Warnung bei einer Abweichung.

2. Verfahren gemäß Anspruch 1, **dadurch gekennzeichnet, dass** der Ultraschallsensor (19) eine Arbeitsfrequenz im Bereich von 0,1 bis 1 MHz aufweist.

3. Verfahren gemäß Anspruch 1 oder 2, **dadurch gekennzeichnet, dass** die Hohlwelle (1) eine Länge im Bereich von 2 bis 10 m aufweist.

4. Verfahren gemäß einem der Ansprüche 1 bis 3, **dadurch gekennzeichnet, dass** der Sensor (19) mit einem Kontaktmittel auf die Stirnseite (21) der Hohlwelle (1) aufgesetzt wird.

5. Verfahren gemäß einem der Ansprüche 1 bis 4, **dadurch gekennzeichnet, dass** die Hohlwelle (1) aus einem metallischen Werkstoff gefertigt ist.

6. Verfahren gemäß einem der Ansprüche 1 bis 5, **dadurch gekennzeichnet, dass** die Stirnfläche (21) der Hohlwelle (1), auf die der Sensor (19) aufgesetzt wird, aus einem Vollmaterial gefertigt ist oder geschweißt ist.

7. Verfahren gemäß einem der Ansprüche 1 bis 6, **dadurch gekennzeichnet, dass** die Stirnfläche (21) mit dem Mantel (27) stoffschlüssig verbunden ist.

8. Verfahren gemäß einem der Ansprüche 1 bis 7, **dadurch gekennzeichnet, dass** die Stirnfläche (21) einen Winkel zur Welle (1) aufweist, der im Bereich von 89 bis 91° liegt.

9. Verfahren gemäß einem der Ansprüche 1 bis 8, **dadurch gekennzeichnet, dass** Funktionselemente (13) auf der Hohlwelle aufgeschweißt sind.

10. Verfahren gemäß Anspruch 9, **dadurch gekennzeichnet, dass** die Funktionselemente (13) Schaufeln, Scheiben oder Knetelemente sind.

## Claims

1. A method for detecting damage to a hollow shaft (1) in a paddle dryer, a disk dryer or a kneader, wherein the hollow shaft (1) has no radially encircling notches, openings or channels, comprising the following steps:
(a) positioning an ultrasound sensor (19) for transmitting and receiving a signal at an end face (21) of the hollow shaft (1),
(b) transmitting a signal and receiving an echo of the signal,
(c) determining the signal propagation time from the time of transmitting the signal until receiving the echo,
(d) comparing the signal propagation time to a predetermined intended value and emitting a warning in the case of a deviation.

2. The method according to claim 1, wherein the ultrasound sensor (19) has an operating frequency in the range between 0.1 and 1 MHz.

3. The method according to claim 1 or 2, wherein the hollow shaft (1) has a length in the range between 2 and 10 m.

4. The method according to one of claims 1 to 3, wherein the sensor (19) is placed onto the end face (21) of the hollow shaft (1) using a coupling agent.

5. The method according to one of claims 1 to 4, wherein the hollow shaft (1) is made of a metallic material.

6. The method according to one of claims 1 to 5, wherein the end face (21) of the hollow shaft (1) onto which the sensor (19) is placed is made of solid matter or welded.

7. The method according to one of claims 1 to 6, wherein the end face (21) is integrally connected to the casing (27).

8. The method according to one of claims 1 to 7, wherein the end face (21) has an angle with respect to the shaft (1), which angle lies in the range between 89 and 91°.

9. The method according to one of claims 1 to 8, wherein functional elements (13) are welded onto the hollow shaft.

10. The method according to claim 9, wherein the functional elements (13) are paddles, disks or kneading elements.

## Revendications

1. Procédé de détection de dommages sur un arbre creux (1) dans un séchoir à palettes, un séchoir à disques ou un pétrisseur, l'arbre creux (1) ne possédant pas d'encoches, d'ouvertures ou de canaux circulaires radiaux, comprenant les étapes suivantes :
(a) positionnement d'un capteur à ultrasons (19) pour envoyer et recevoir un signal sur un côté frontal (21) de l'arbre creux (1),
(b) envoi d'un signal et réception d'un écho du signal,
(c) détermination du temps de propagation du signal entre le moment de l'envoi du signal et la réception de l'écho,
(d) comparaison du temps de propagation du signal avec une valeur de seuil prédéfinie et délivrance d'une alerte en cas d'écart.

2. Procédé selon la revendication 1, **caractérisé en ce que** le capteur à ultrasons (19) possède une fréquence de fonctionnement dans la plage de 0,1 à 1 MHz.

3. Procédé selon la revendication 1 ou 2, **caractérisé en ce que** l'arbre creux (1) possède une longueur dans la plage de 2 à 10 m.

4. Procédé selon l'une des revendications 1 à 3, **caractérisé en ce que** le capteur (19) est posé sur le côté frontal (21) de l'arbre creux (1) avec un moyen de contact.

5. Procédé selon l'une des revendications 1 à 4, **caractérisé en ce que** l'arbre creux (1) est fabriqué dans un matériau métallique.

6. Procédé selon l'une des revendications 1 à 5, **caractérisé en ce que** la face frontale (21) de l'arbre creux (1) sur laquelle est posé le capteur (19) est fabriquée en un matériau plein ou est soudée.

7. Procédé selon l'une des revendications 1 à 6, **caractérisé en ce que** la face frontale (21) est reliée par fusion de matières avec l'enveloppe (27).

8. Procédé selon l'une des revendications 1 à 7, **caractérisé en ce que** la face frontale (21) présente par rapport à l'arbre (1) un angle qui se trouve dans la plage de 89 à 91°.

9. Procédé selon l'une des revendications 1 à 8, **caractérisé en ce que** des éléments fonctionnels (13) sont soudés sur l'arbre creux.

10. Procédé selon la revendication 9, **caractérisé en ce que** les éléments fonctionnels (13) sont des palettes, des disques ou des éléments de pétrissage.
